# EUROPÄISCHE PATENTSCHRIFT

(11) **EP 3 238 951 B1**
(45) Veröffentlichungstag und Bekanntmachung des Hinweises auf die Patenterteilung: **28.07.2021**
(21) Anmeldenummer: 17168269.3
(22) Anmeldetag: 26.04.2017
(51) Int. Cl.: B60B 1/00, B60B 1/04, B60B 27/00, B60B 27/02, B60B 1/02

(54) **NABE UND LAUFRAD**
HUB AND WHEEL
MOYEU ET ROUE

(30) Priorität: 26.04.2016 DE 102016107755
(43) Veröffentlichungstag der Anmeldung: 01.11.2017
(73) Patentinhaber: DT Swiss AG, 2504 Biel (CH)
(72) Erfinder: Haas, Simon, CH-4532 Feldbrunnen (CH); Spahr, Stefan, CH-2543 Lengnau (CH)
(74) Vertreter: BSB Patentanwälte Schütte & Engelen Partnerschaft mbB

(56) Entgegenhaltungen:
- EP-A1- 1 614 548
- EP-A1- 1 894 645
- EP-A2- 1 122 096
- US-A- 5 429 421

## Beschreibung

Die vorliegende Erfindung betrifft eine Nabe und ein Laufrad für ein wenigstens teilweise muskelbetriebenes Zweirad und insbesondere für ein Fahrrad.

Im sportlichen Bereich sowie auch im Wettkampfbereich werden meist besonders leichte und zugleich sehr belastbare Fahrradkomponenten gefordert. So sind beispielsweise Laufräder mit geraden bzw. nicht gekröpften Speichen bekannt geworden, welche ein geringes Gewicht und zugleich eine hohe Stabilität bieten. Für solche Laufräder werden Naben benötigt, die einen zur Aufnahme von geraden bzw. nicht gekröpften Speichen geeigneten Nabenflansch aufweisen.

Im Stand der Technik sind dazu Naben bekannt geworden, bei denen der Nabenflansch eine Vielzahl an tangentialen bzw. radialen Bohrungen aufweist. Durch diese werden die Speichen eingeführt und im montierten Zustand gehalten. Damit für jede Speiche eine stabile Aufnahmemöglichkeit gewährleistet werden kann und damit auch sich kreuzende Speichen möglich sind, muss der Flansch entsprechend breit ausgeführt werden. Beispielsweise zeigt die US 5 429 421 A eine Nabe für ungekröpfte Speichen mit einem entsprechend breiten Nabenflansch. Dadurch ergibt sich für solche Naben ein sehr ungünstiges Gewicht.

Ein weiterer Nachteil der bekannten Naben ist, dass der Nabenflansch oft einen sehr großen Durchmesser aufweist, da die geraden Speichen beim Einspeichen entsprechend Platz benötigen. Besonders problematisch ist das Einspeichen beispielsweise bei Naben mit einem Rotor oder mit einer Aufnahme für Bremsscheiben. An diesen Positionen sind die Nabenflansche daher mit einem oft sehr großen Durchmesser ausgeführt, was sich nachteilig auf das Gewicht der Nabe auswirkt. Zudem bieten große bzw. breite Nabenflansche eine große Windangriffsfläche und weisen daher oft eine ungünstige Aerodynamik auf.

Im Stand der Technik sind daher Naben bekannt geworden, welche gerade Speichen aufnehmen können und zugleich einen kompakt ausgestalteten Nabenflansch aufweisen. Damit ein unkompliziertes Einspeichen möglich ist, sind am Nabenflansch in der Regel großflächige Ausnehmungen oder zahlreiche Schlitzungen vorgesehen. Das führt allerdings oft zu einer erheblichen konstruktiven Schwächung des Nabenflansches.

Es ist daher die Aufgabe der vorliegenden Erfindung, eine Nabe und ein Laufrad zur Verfügung zu stellen, welche eine stabile und zugleich kompakte Aufnahmemöglichkeit für die Speichen im Nabenflansch bieten.

Diese Aufgabe wird gelöst durch eine Nabe mit den Merkmalen des Anspruchs 1 und durch ein Laufrad mit den Merkmalen des Anspruchs 15. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Nabe verfügt über ein Nabengehäuse. Das Nabengehäuse ist zur drehbaren Anordnung gegenüber wenigstens einer im Nabengehäuse aufgenommenen Achse geeignet und ausgebildet. An dem Nabengehäuse ist wenigstens ein umlaufender Nabenflansch vorgesehen. Der Nabenflansch dient zur Aufnahme und definierten Orientierung einer Mehrzahl an ungekröpften bzw. geraden Speichen. Die Speichen weisen jeweils einen Speichenkörper und einen Speichenkopf auf. Der Speichenkopf ist insbesondere abgeflacht. Der Nabenflansch umfasst eine Mehrzahl von Aufnahmeabschnitten zur Aufnahme jeweils eines Speichenkopfes. Erfindungsgemäß sind die Aufnahmeabschnitte wenigstens teilweise axial an dem Nabenflansch angeordnet. Den Aufnahmeabschnitten ist jeweils eine Speichendurchführung zugeordnet. Durch die Speichendurchführung ist eine aufgenommene Speiche aus dem Aufnahmeabschnitt herausführbar. Dabei ist für jeweils wenigstens zwei Speichendurchführungen eine gemeinsame und umfänglich geschlossene Austrittsöffnung im Nabenflansch vorgesehen. Erfindungsgemäß umgibt der Nabenflansch die Austrittsöffnung einstückig.

Die erfindungsgemäße Nabe hat viele Vorteile. Ein erheblicher Vorteil ist, dass durch die gemeinsame und umfänglich geschlossene Austrittsöffnung nur wenige Bohrungen bzw. Ausnehmungen im Nabenflansch nötig sind. Dadurch wird eine hohe Stabilität bei einer kompakten Bauweise des Nabenflansches erreicht. Beispielsweise kann durch die gemeinsame Austrittsöffnung die Anzahl von Bohrungen gegenüber herkömmlichen Naben um die Hälfte reduziert werden, was einen beträchtlichen Stabilitätsgewinn ohne wesentliche Gewichtszunahme mit sich bringt. Zudem sind die Speichen dadurch zuverlässig gegen unbeabsichtigtes Ausspeichen gesichert. Denn eine solche Austrittsöffnung ermöglicht besonders gut, dass die beiden aufgenommen Speichen sich gegenseitig an einem ungewollten Austreten aus der Austrittsöffnung blockieren.

Des Weiteren können dadurch beide Speichen besonders weit axial außen angeordnet werden. Zwischen den beiden Speichen liegt auch kein Material, sodass sich die Speichen beispielsweise auch berühren können und vorzugsweise berühren. Beide Maßnahmen tragen dazu bei, dass die axial inneren Speichen nicht so steil an dem Laufrad montiert werden müssen wie es bei anderen Konstruktionen der Fall ist. Außerdem ergibt sich insgesamt eine sehr hohe axiale Laufradsteifigkeit bei einem besonders geringen Gewicht. Zudem ermöglicht die erfindungsgemäße Nabe eine besonders geringe radiale Ausdehnung des Nabenflansches, sodass Nabenflansche mit sehr kleinen Durchmessern verwirklicht werden können, wodurch das Gewicht der Nabe noch weiter reduziert werden kann.

Ein besonderer Vorteil ist auch, dass der Nabenflansch die Austrittsöffnung einstückig umgibt. Dadurch wird erstens eine hohe Stabilität der Nabe bei einem günstigen Gewicht erreicht. Das ist bei Hochleistungskomponenten bzw. im Wettkampfbereich besonders entscheidend. Zweitens wird ein ungewolltes Austreten der Speichen beim Einspeichen und auch im Fahrbetrieb wirkungsvoll vermieden, ohne dass Deckel oder Verschlüsse angebracht werden müssen. Zudem kann es durch das Lösen bzw. Verlieren eines solchen Deckels zu gefährlichen Stürzen kommen.

Die Austrittsöffnungen sind vorzugsweise an einer radialen Oberseite des Nabenflansches angeordnet. Insbesondere erstreckt sich die Austrittsöffnung nur über die radiale Oberseite. Insbesondere erstreckt sich die Austrittsöffnung nicht über eine axiale Innenseite und/oder axiale Außenseite des Nabenflansches. Möglich ist aber auch, dass sich die Austrittsöffnung wenigstens abschnittsweise über eine axiale Innenseite und/oder Außenseite erstreckt. Vorzugsweise beträgt ein Anteil an dem Umfang der Austrittsöffnung und/oder ein Anteil an der Fläche der Austrittsöffnung auf oder an der radialen Oberseite mehr als 50% und insbesondere mehr als 75% und vorzugsweise mehr als 90% des gesamten Umfangs der Austrittsöffnung bzw. der gesamten Fläche der Austrittsöffnung.

Besonders bevorzugt umgibt der Nabenflansch die Austrittsöffnung einstückig und insbesondere werkstoffeinstückig.

Insbesondere ist die Austrittsöffnung als eine Ausnehmung mit einem geschlossenen Umfang in den Nabenflansch eingearbeitet. Vorzugsweise umgibt eine einteilig ausgebildete Wandung des Nabenflansches die Austrittsöffnung vollumfänglich. Insbesondere ist die Austrittsöffnung in Umfangsrichtung vollständig geschlossen. Der Nabenflansch ist vorzugsweise mit dem Nabengehäuse fest verbunden und kann insbesondere einstückig damit ausgebildet sein.

Durch solche Ausgestaltungen kann gewährleistet werden, dass der Nabenflansch auch im Bereich der Austrittsöffnung eine hohe Stabilität aufweist. Insbesondere wird dadurch eine bessere Stabilität erreicht, als beispielsweise bei (zunächst) umfänglich offenen Austrittsöffnungen, welche durch einen Deckel oder dergleichen abgedeckt werden, um umfänglich geschlossen zu wirken. Solche Deckel können in der Regel nicht so vorteilhaft zur Stabilität des Flansches beigetragen, wie es eine einteilige Wandung im Bereich der Austrittsöffnung ermöglicht.

Besonders bevorzugt weist die Austrittsöffnung wenigstens einen definierten Öffnungsquerschnitt auf. Der Öffnungsquerschnitt ist insbesondere dazu geeignet und ausgebildet, zwei Speichen mit einem axialen Versatz zueinander aufzunehmen, sodass die Speichen sich kreuzen können. Vorzugsweise sind die der gemeinsamen Austrittsöffnung zugeordneten Aufnahmeabschnitte mit einem Versatz gegenüber einer Umfangslinie des Nabenflansches angeordnet. Dadurch können die Speichen besonders gut axial versetzt aufgenommen werden.

Es ist möglich, dass die der Austrittsöffnung zugeordneten Speichendurchführungen ebenfalls einen Versatz gegenüber einer Umfangslinie des Nabenflansches aufweisen. Beispielsweise ist ein Aufnahmeabschnitt bzw. eine aufgenommene Speiche gegenüber der Umfangslinie axial weiter innen als der andere Aufnahmeabschnitt bzw. die andere Speiche der gemeinsamen Austrittsöffnung angeordnet. Beispielsweise weist die Austrittsöffnung eine axiale Ausdehnung auf, die für zwei axial versetzt angeordnete und insbesondere sich kreuzende Speichen ausgelegt ist.

Der axiale Versatz ist vorzugsweise auf einen Querschnitt der aufzunehmenden Speichen angepasst. Insbesondere ist der axiale Versatz so angepasst, dass sich die kreuzenden Speichen in einem Kreuzungspunkt berühren. Dabei ist möglich, dass wenigstens eine der beiden Speichen durch die jeweils andere Speiche und durch eine die Austrittsöffnung umgebende Wand des Nabenflansches an einer axialen Bewegung gehindert wird. Dadurch ist die Speiche zuverlässig zwischen dem Nabenflansch und der anderen Speiche eingeklemmt. Besonders bevorzugt ist der Versatz so ausgestaltet, dass sich die aufgenommenen Speichen im Kreuzungspunkt berühren.

Bevorzugt weisen die Speichendurchführungen einer gemeinsamen Austrittsöffnung sich kreuzende Längsachsen auf, sodass darin aufgenommene Speichen sich kreuzen können. Insbesondere ist für die Speichendurchführungen eine gemeinsame und umfänglich geschlossene Austrittsöffnung vorgesehen, welche kreuzende Längsachsen aufweisen. Eine gemeinsame Austrittsöffnung für sich kreuzende Speichen ist besonders vorteilhaft, da diese nur geringfügige Ausnehmungen im Nabenflansch erfordert.

Besonders bevorzugt weist die Austrittsöffnung einen Öffnungsquerschnitt auf, in welchen wenigstens eine aufzunehmende Speiche von einer axialen Außenseite des Nabenflansches einführbar ist. Dabei ist insbesondere ein (vorzugsweise lineares) Einführen ohne Biegung der Speiche vorgesehen. Insbesondere erfolgt das Einführen in Längsrichtung der Speiche. Eine solche Austrittsöffnung ermöglicht ein besonders unaufwendiges und zügiges Einspeichen. Beispielsweise weist die Austrittsöffnung dazu einen gezielt erweiterten Öffnungsquerschnitt auf. Insbesondere ist der Öffnungsquerschnitt derart erweitert, dass eine schräg ausgerichtete bzw. geneigte Speiche einführbar ist.

Der Öffnungsquerschnitt, der das Einführen einer Speiche von einer axialen Außenseite des Nabenflansches aus ermöglicht, hat den besonderen Vorteil, dass die Nabe zeitsparend und unaufwendig eingespeicht werden kann. Zudem ist daran besonders vorteilhaft, dass die Austrittsöffnung und insbesondere auch der gesamte Nabenflansch besonders kompakt und stabil ausführbar sind. Denn wenn ein solches Einführen der Speichen nicht möglich ist, müssen die Speichen aus Richtung der Felge kommend mit ihrem Speichenkopf voran eingefädelt werden. Dazu muss die Austrittsöffnung entsprechend groß dimensioniert werden, damit der Speichenkopf hindurch passt. Das kann den Nabenflansch schwächen. Wenn der Speichenkopf durch die Austrittsöffnung passt, besteht zudem das Risiko des ungewollten Austretens einer Speiche.

Insbesondere weist die Austrittsöffnung einen Öffnungsquerschnitt auf, welcher derart ausgebildet ist, dass wenigstens eine aufzunehmende Speiche nur von einer axialen Außenseite des Nabenflansches aus eingeführt werden kann. Insbesondere sind die wenigstens zwei Speichen, welche durch die gemeinsame Austrittsöffnung verlaufen, nur von einer axialen Außenseite des Nabenflansches aus einführbar. Möglich ist aber auch, dass wenigstens die erste aufzunehmende Speiche auch von der radialen Oberseite aus bzw. mit dem Speichenkopf voran einführbar ist.

Insbesondere weist Austrittsöffnung einen Öffnungsquerschnitt auf, welcher derart ausgebildet ist, dass ein Speichenkopf einer aufzunehmenden Speiche nicht hindurchführbar ist. Insbesondere weist die Austrittsöffnung einen Öffnungsquerschnitt auf, welcher enger als ein Speichenkopf einer aufzunehmenden Speiche ausgebildet ist. Möglich ist aber auch, dass ein Speichenkopf einer aufzunehmenden Speiche nur dann nicht durch die Austrittsöffnung hindurchführbar ist, wenn bereits eine Speiche in der Austrittsöffnung aufgenommen ist.

In den Öffnungsquerschnitt ist vorzugsweise wenigstens eine aufzunehmende Speiche von einer axialen Außenseite des Nabenflansches einführbar, wenn bereits eine Speiche in der Austrittsöffnung angeordnet ist. Dazu kann der Öffnungsquerschnitt beispielsweise wenigstens eine weitere Querschnittserweiterung aufweisen.

In einer möglichen Ausgestaltung ist in der Austrittsöffnung eine Speiche axial weiter innen als die andere Speiche angeordnet. Dabei ist der Öffnungsquerschnitt vorzugsweise derart ausgebildet, dass die axial außenliegende Speiche einführbar ist, wenn die axial innenliegende Speiche bereits in der Austrittsöffnung angeordnet ist. Vorzugsweise werden die Speichen dabei mit dem Ende zuerst eingeführt, welches dem (insbesondere abgeflacht ausgebildeten) Speichenkopf gegenüberliegt.

In allen Ausgestaltungen ist es bevorzugt, dass die Austrittsöffnung einen Öffnungsquerschnitt aufweist, welcher für beide aufzunehmenden Speichen jeweils wenigstens ein Langloch zur Verfügung stellt. Dabei kann ein einzelnes Langloch auch einen größeren Querschnitt aufweisen als der Querschnitt einer Speiche. Insbesondere ermöglichen beide Langlöcher zusammen einen Durchtritt für beide Speichen. Jedenfalls müssen die Querschnitte bzw. Öffnungsquerschnitte derart gestaltet sein, dass beide Speichen montiert werden können. Dabei kann ein einzelnes Langloch auch kleiner sein als der Querschnitt einer einzelnen Speiche, wenn das andere Langloch einen entsprechend größeren Querschnitt aufweist. Beispielsweise umfasst der Öffnungsquerschnitt zwei oval ausgestaltete Langlöcher. Beispielsweise kann ein ovales Langloch einen Querschnitt aufweisen, welcher aus zwei Kreisbögen mit einem rechteckigen Mittelstück zusammengesetzt ist. Möglich ist auch ein Langloch mit einem elliptischen Querschnitt oder einem asymmetrisch ovalen Querschnitt. Eine solche Austrittsöffnung benötigt nur eine entsprechend kleinflächige Ausnehmung im Nabenflansch und bietet dennoch eine gute Einführbarkeit der Speichen.

Insbesondere umfasst jedes der Langlöcher wenigstens zwei Abschnitte. Ein erster Abschnitt ist insbesondere als eine Querschnittserweiterung für das Einführen der Speiche während der Montage vorgesehen. Ein zweiter Abschnitt des Langlochs ist vorzugsweise für die aufgenommene und montierte Speiche vorgesehen. Das ermöglicht ein Einführen der Speichen von axial außen auch dann, wenn der Nabenflansch nur einen geringen Durchmesser aufweist. Der erste Abschnitt kann einen größeren Querschnitt oder Durchmesser aufweisen als der zweite Abschnitt.

Vorzugsweise umfasst ein Langloch wenigstens eine Durchgangsbohrung als Speichendurchführung und wenigstens eine in den Nabenflansch eingelassene Senke. Vorzugsweise sind beide Langlöcher der Austrittsöffnung derart ausgebildet. Insbesondere ist die Senke neben der Durchgangsbohrung in den Nabenflansch eingelassen. Die Senke ist insbesondere dazu geeignet und ausgebildet, einen Freiraum beim Einführen der Speichen bereitzustellen. Die Senke ermöglicht somit ein schräges Einführen der Speichen, ohne dass eine großflächige Bohrung nötig wäre, welche den Nabenflansch schwächen würde. Möglich ist aber auch, dass statt der Senke eine Sacklochbohrung oder eine durchgehende Bohrung vorgesehen ist.

Insbesondere kann eine Speiche auch dann eingeführt werden, wenn eine andere Speiche bereits aufgenommen ist. Dazu kann vorgesehen sein, dass die bereits aufgenommene Speiche wenigstens teilweise im Bereich der Senke angeordnet ist, um eine Durchführung der anderen Speiche zu ermöglichen.

Die Langlöcher sind vorzugsweise so ausgerichtet, dass sich ihre Längsachsen schneiden. Die Längsachse eines Langlochs verläuft dabei insbesondere in Längsrichtung des Querschnitts des Langlochs. Die Längsachse der Langlöcher ist insbesondere quer zur Längsachse der aufgenommenen Speichen ausgerichtet. Vorzugsweise schneiden sich die Längsachsen derart, dass sich eine im Wesentlichen V-förmige und vorzugsweise V-förmige Anordnung der Langlöcher zueinander ergibt. Insbesondere weist die Austrittsöffnung einen Öffnungsquerschnitt auf, welcher durch zwei V-förmig zueinander angeordnete Langlöcher gebildet wird. Durch eine derart ausgestaltete Austrittsöffnung können Speichen besonders gut eingeführt werden, die sich im montierten Zustand kreuzen. Der Speichenschaft jeder Speiche erstreckt sich dann jeweils vorzugsweise in Längsrichtung eines der Langlöcher.

Es ist besonders bevorzugt, dass sich die Langlöcher wenigstens teilweise überschneiden. Insbesondere weist die Austrittsöffnung einen Öffnungsquerschnitt auf, welcher durch zwei V-förmig zueinander und sich wenigstens teilweise überschneidende Langlöcher gebildet wird. Durch eine solche Überschneidung kann die Austrittsöffnung besonders kompakt ausgestaltet werden und bietet zugleich genug Freiraum bei der Montage der Speichen. Die sich ergebende Austrittsöffnung weist einen Querschnitt auf, der größer ist als ein Durchmesser der Speiche bzw. des Speichenschafts der entsprechende Speiche, auch wenn der (Innen-)Durchmesser bzw. die Innenabmessung des Langlochs in einem mittleren Bereich angepasst an den (Außen-) Durchmesser bzw. die Außenabmessung der Speiche ist. Angepasst bedeutet insbesondere, dass sich die Abmessungen vorzugsweise um maximal 100% und insbesondere um maximal 50% und besonders bevorzugt um maximal 20% unterscheiden.

In einer vorteilhaften Weiterbildung weist wenigstens ein Teil der Speichendurchführungen jeweils wenigstens einen axial offenen Einführungsabschnitt auf. Insbesondere sind alle Speichendurchführungen mit einem axial offenen Einführungsabschnitt ausgestaltet. Der Einführungsabschnitt ist insbesondere dazu geeignet und ausgebildet, dass eine aufzunehmende Speiche von einer axialen Außenseite des Nabenflansches schräg in den Aufnahmeabschnitt eingeführt werden kann. Vorzugsweise ist der Einführungsabschnitt an einer axialen Außenseite offen ausgebildet.

Dadurch kann eine Speiche nicht nur über den Aufnahmeabschnitt, sondern auch über den axial offen ausgebildeten Teil der Speichendurchführung eingeführt werden. Das ermöglicht ein schräges Einführen der Speichen von der axialen Außenseite auch dann, wenn der Nabenflansch einen sehr kleinen Durchmesser aufweist oder mit einem Rotor bzw. einer Bremsenaufnahme ausgestattet ist.

Der axial offene Einführungsabschnitt geht vorzugsweise umfänglich offen in den Aufnahmeabschnitt über. In einer Ausgestaltung, bei welcher der Aufnahmeabschnitt in einem Aufnahmeraum aufgenommen ist, geht der Einführungsabschnitt vorzugsweise umfänglich offen in den Aufnahmeraum über. So wird ein besonders guter Zugang zur Speichendurchführung erreicht.

Der Einführungsabschnitt weist vorzugsweise eine Längsachse auf, welche im Wesentlichen parallel und vorzugsweise parallel zu einer Längsachse der zugehörigen Speichendurchführung verläuft. Ein solcher Einführungsabschnitt bietet die Möglichkeit, dass eine bereits in die Speichendurchführung eingeführte Speiche schräg aus dem Aufnahmeabschnitt herausragen kann. Beispielsweise ist der Einführungsabschnitt als ein Durchstich in die Speichendurchführung eingearbeitet. Vorzugsweise geht der Durchstich dabei auch in den Aufnahmeabschnitt bzw. den Aufnahmeraum über.

Vorzugsweise sind die Aufnahmeabschnitte nur an einer axialen Seite des Nabenflansches und insbesondere an einer axialen Außenseite angeordnet. Die Aufnahmeabschnitte können an einer axialen Außenseite und/oder an einer axialen Innenseite des Nabenflansches angeordnet sein. Möglich ist auch, dass die Aufnahmeabschnitte an beiden axialen Seiten des Nabenflansches angeordnet sind. Eine Anordnung an der axialen Außenseite ermöglicht ein besonders einfaches Einführen der Speichen. Die Außenseite ist dabei insbesondere die Seite, welche zu einem axialen Ende der Nabe hin ausgerichtet ist. Bevorzugt ist auch, dass die Aufnahmeabschnitte umlaufend und insbesondere gleichmäßig verteilt umlaufend über den Nabenflansch angeordnet sind.

Es ist möglich dass zwischen benachbarten Aufnahmeabschnitten und insbesondere zwischen Aufnahmeabschnitten, welche Speichendurchführungen mit sich kreuzenden Längsachsen aufweisen, jeweils wenigstens eine Vertiefung im Nabenflansch ausgebildet ist. Die Vertiefung ist insbesondere an einer axialen Seite und besonders bevorzugt an einer axialen Außenseite des Nabenflansches angeordnet. Möglich ist auch, dass die Vertiefung an einer axialen Innenseite vorgesehen ist. Es ist möglich, dass zwischen Aufnahmeabschnitten, welche Speichendurchführungen mit sich nicht kreuzenden Längsachsen aufweisen, keine Vertiefung im Nabenflansch ausgebildet ist. Möglich ist aber auch, dass dort wenigstens eine Vertiefung angeordnet ist.

Solche Vertiefungen bieten eine vorteilhafte Reduktion des Gewichts, ohne dass ungünstige Auswirkungen auf die Stabilität auftreten. Besonders vorteilhaft ist dabei eine Vertiefung zwischen benachbarten Aufnahmeabschnitten mit Speichendurchführungen mit sich kreuzenden Längsachsen, da bei den üblicherweise auftretenden Abmessungen eines Laufrades zwischen diesen Aufnahmeabschnitten ohnehin eine entsprechende Beabstandung vorgesehen ist. Diese Beabstandung eignet sich besonders gut für eine Vertiefung, da hier genügend Material vorhanden ist. Insbesondere wird die Vertiefung so ausgestaltet, dass diese von ausreichend Material für die notwendige Betriebsfestigkeit des Nabenflansches umgeben ist.

In allen Ausgestaltungen ist es besonders bevorzugt, dass die Aufnahmeabschnitte wenigstens teilweise in wenigstens einem Aufnahmeraum angeordnet sind. Insbesondere wird der Aufnahmeraum durch wenigstens eine Ausnehmung im Nabenflansch zur Verfügung gestellt. Solche Aufnahmeabschnitte bieten eine gute Zugänglichkeit der Aufnahmeabschnitte und ermöglichen zudem eine aerodynamisch günstige Unterbringung der Speichenköpfe.

Vorzugsweise ist der Aufnahmeraum axial offen und besonders bevorzugt axial nach außen offen ausgebildet. Möglich ist auch, dass der Aufnahmeraum axial innen offen ausgebildet ist.

Es ist möglich, dass der Aufnahmeraum durch wenigstens eine Abdeckung verschließbar ist. Insbesondere sind alle Aufnahmeräume eines Nabenflansches durch wenigstens eine gemeinsame Abdeckung verschließbar. Für die Aufnahmeräume eines Nabenflansches können auch zwei oder mehr Abdeckungen vorgesehen sein. Möglich ist auch, dass für jeden Aufnahmeraum wenigstens eine Abdeckung vorgesehen ist.

Beispielsweise kann eine ringförmige Abdeckscheibe vorgesehen sein, welche auf der axialen Außenseite des Nabenflansches angeordnet wird. Es kann vorgesehen sein, dass die Abdeckung lösbar und vorzugsweise werkzeuglos lösbar an dem Nabenflansch angeordnet ist. Möglich ist auch, dass die Abdeckung fest mit dem Nabenflansch verbunden ist. Beispielsweise kann eine stoffschlüssige Verbindung vorgesehen sein, zum Beispiel eine Klebeverbindung. Eine solche Abdeckung ermöglicht eine besonders aerodynamische Ausgestaltung des Nabenflansches.

Die Abdeckung kann auch fest oder lösbar an der Achse angeordnet sein. Beispielsweise kann die Abdeckung Teil eines Endanschlages sein, welcher drehfest oder drehbar an der Achse angeordnet ist und/oder auf die Achse aufgebracht, aufgesteckt oder eingesteckt oder eingebracht ist. Insbesondere ist die Abdeckung gegenüber dem Nabengehäuse drehbar gelagert. Vorzugsweise ist die Abdeckung drehfest an der Achse und/oder dem Endanschlag befestigt. Die Abdeckung und der Endanschlag können auch einteilig ausgebildet sein. Die Abdeckung kann auch an einem Rotor angeordnet sein oder Teil eines solchen sein. Die Abdeckung kann aber auch an dem Nabengehäuse befestigt sein. Zum Einspeichen bzw. Ausspeichen kann die Abdeckung abgenommen werden.

Insbesondere ist der Aufnahmeraum durch wenigstens eine axiale Rückwand und durch wenigstens eine wenigstens teilweise umlaufende Seitenwand begrenzt. Eine umlaufende Seitenwand bildet eine Umfangswand. Die Rückwand wird insbesondere durch die axiale Außenwand des Nabenflansches ("Boden des Aufnahmeraums") zur Verfügung gestellt. Die Seitenwand verläuft insbesondere quer zur Rückwand. Insbesondere ist die Seitenwand derart umlaufend ausgestaltet, dass diese nur von der Speichendurchführung und/oder dem Einführungsabschnitt durchbrochen ist. Durch die Ausgestaltung mit einer Rückwand und einer quer dazu verlaufenden Seitenwand ergibt sich ein gut zugänglicher Aufnahmeraum. Zudem wird eine hohe Stabilität des Nabenflansches auch bei dynamischen Beanspruchungen gewährleistet.

Besonders bevorzugt stellt die Seitenwand wenigstens abschnittsweise einen tangential und/oder radial verlaufenden Steg zur Verfügung. Ein derartiger Steg ermöglicht eine vorteilhafte Versteifung des Nabenflansches hinsichtlich der zu erwartenden Zugkräfte durch die Speichen. Besonders bevorzugt stellen die Seitenwände von benachbarten Aufnahmeräumen wenigstens einen Steg zur Verfügung bzw. bilden zwischen den jeweiligen Seitenwänden einen Steg. Besonders bevorzugt weist der Nabenflansch an den axialen Seiten und/oder an der radialen Seite keine umlaufende Nut und/oder umlaufende Ausnehmung auf. Eine vollständig umlaufende Nut kann die Betriebsfestigkeit des Nabenflansches unzulässig schwächen.

Es ist möglich, dass auch die zur Gewichtsreduzierung dienenden Vertiefungen von wenigstens einer Seitenwand (kann auch als Umfangswand bezeichnet werden) umgeben sind. Dabei wird vorzugsweise durch das Material des Nabenflansches zwischen der Seitenwand der Vertiefung und der Seitenwand eines benachbarten Aufnahmeraums wenigstens ein Steg zur Verfügung gestellt. Insbesondere sind im Nabenflansch eine Vielzahl von Aufnahmeräumen und/oder Vertiefungen vorgesehen, welche jeweils von Seitenwänden umgeben sind. Dabei bilden die Seitenwände bzw. das Material dazwischen wenigstens teilweise gemeinsam eine Vielzahl von Stegen im Nabenflansch. Diese Stege verstärken den Nabenflansch erheblich, während die Vertiefungen zur Gewichtsreduzierung dient.

In einer vorteilhaften Ausgestaltung ist es bevorzugt, dass wenigstens einige der Aufnahmeabschnitte paarweise in jeweils einem Aufnahmeraum angeordnet sind. In einer anderen Ausgestaltung ist vorzugsweise vorgesehen, dass wenigstens einige der Aufnahmeabschnitte einzeln in jeweils einem Aufnahmeraum angeordnet sind. In einer möglichen und bevorzugten Ausgestaltung kann die Nabe sowohl Aufnahmeräume mit nur einem Aufnahmeabschnitt als auch Aufnahmeräume mit paarweise angeordneten Aufnahmeabschnitten aufweisen. Möglich sind auch Aufnahmeräume mit drei oder vier oder mehr Aufnahmeabschnitten. Die Festlegung der Anzahl der Aufnahmeabschnitte in den Aufnahmeräumen erfolgt vorzugsweise unter Berücksichtigung der zu erwartenden Krafteinwirkungen auf den Nabenflansch, zum Beispiel ob ein angetriebenes Laufrad vorliegt oder nicht.

Insbesondere ist eine Nabe vorgesehen, welche wenigstens einen Nabenflansch mit Aufnahmeräumen mit ausschließlich paarweise angeordneten Aufnahmeabschnitten umfasst. Insbesondere ist diese Ausgestaltung für einen Nabenflansch vorgesehen, welcher gegenüber einem anderen Nabenflansch der Nabe einen reduzierten Durchmesser aufweist. Insbesondere umfasst die Nabe wenigstens einen Nabenflansch mit Aufnahmeräumen, in denen die Aufnahmeabschnitte ausschließlich einzeln angeordnet sind. Vorzugsweise ist ein rotorseitiger und/oder bremsseitiger Nabenflansch derart ausgebildet.

Besonders bevorzugt ist eine Nabe vorgesehen, welche einen (den ersten) Nabenflansch mit Aufnahmeräumen mit ausschließlich paarweise angeordneten Aufnahmeabschnitten umfasst und welche einen anderen (oder den zweiten) Nabenflansch mit Aufnahmeräumen aufweist, in denen die Aufnahmeabschnitte ausschließlich einzeln angeordnet sind.

In allen Ausgestaltungen ist es besonders bevorzugt, dass im Aufnahmeraum wenigstens eine Aufnahmetasche mit wenigstens einem Hinterschnitt angeordnet ist. Die Aufnahmetasche ist insbesondere dazu geeignet und ausgebildet, den Speichenkopf und vorzugsweise einen abgeflachten Speichenkopf verdrehsicher zu halten. Insbesondere ist jedem Aufnahmeabschnitt (genau) eine Aufnahmetasche zugeordnet. Die Aufnahmetasche ist vorzugsweise an den (z. B. abgeflachten) Querschnitt des Speichenkopfes angepasst. Insbesondere ist die Aufnahmetasche an einen parallel zur Längsachse der Speiche verlaufenden Querschnitt des Speichenkopfes angepasst. Es können auch Speichen mit einem eckigen, mehreckigen, runden, abgerundeten und insbesondere nicht abgeflachten Speichenkopf vorgesehen sein.

Vorzugsweise umfasst der (insbesondere abgeflachte) Speichenkopf zwei gebogene Schenkel. Insbesondere sind die Schenkel in wenigstens einer Achse konvex gebogen. Dabei weist die Aufnahmetasche zur Aufnahme der Schenkel entsprechend gekrümmte Bereiche auf. Durch eine solche Aufnahmetasche werden ein gleichmäßiges Anliegen der Speiche und somit ein guter Formschluss und eine gute Krafteinleitung erreicht.

Es ist möglich, dass die Aufnahmetasche dazu geeignet und ausgebildet ist, sich unter dem Einfluss einer aufgenommenen Speiche wenigstens teilweise umzuformen. Insbesondere tritt eine solche Umformung auf, wenn die Nabe in einem eingespeichten Zustand in einem Laufrad aufgenommen ist. Durch eine solche nachträgliche Umformung wird ein besonders enger Formschluss erreicht. Beispielsweise besteht die Aufnahmetasche bzw. der Umgebungsmaterial aus einer Aluminiumlegierung und die Speiche ist aus einer Stahllegierung gefertigt.

Die Aufnahmetasche weist vorzugsweise wenigstens zwei gegenüberliegende Anlegeabschnitte auf. An die Anlegeabschnitte ist insbesondere ein aufgenommener Speichenkopf mit jeweils einer Seitenkante verdrehsicher anlegbar. Durch die gegenüberliegenden Anlegeabschnitte wird ein Verdrehen in beide Drehrichtungen wirkungsvoll vermieden. Besonders bevorzugt ist wenigstens ein Anlegeabschnitt durch die Speichendurchführung unterbrochen. Der Anlegeabschnitt ist insbesondere so ausgestaltet, dass die aufgenommene Speiche mit einer abgeflachten Seite des Speichenkopfes verdrehsicher anlegbar ist.

Insbesondere ist der Nabenflansch dazu geeignet und ausgebildet, tangential ausgerichtete Speichen aufzunehmen. Dabei können sich die Speichen einmal oder auch mehrmals miteinander kreuzen. Möglich ist auch eine (rein) radiale Speichenführung.

In einer bevorzugten Ausgestaltung überschneidet sich die Aufnahmetasche abschnittsweise mit wenigstens einem axial offenen Einführungsabschnitt. Insbesondere überschneidet sich die Aufnahmetasche abschnittsweise mit dem zuvor beschriebenen axial offenen Einführungsabschnitt. Dabei ist die Aufnahmetasche insbesondere abschnittsweise axial offen ausgebildet. Eine solche Überschneidung von Aufnahmetasche und Einführungsabschnitt ermöglicht eine besonders kompakte Ausgestaltung des Nabenflansches.

Erfindungsgemäß ist für jeweils zwei Speichendurchführungen eine gemeinsame und umfänglich geschlossene Austrittsöffnung im Nabenflansch vorgesehen, sodass durch eine einzelne gemeinsame Austrittsöffnung zwei Speichen den Nabenflansch in Richtung Felge verlassen können. Die Speichendurchführungen, welche in einer gemeinsamen Austrittsöffnung enden, sind vorzugsweise schräg zueinander angeordnet, sodass ihre Längsachsen aufeinander zu laufen. Insbesondere kreuzen sich die Längsachsen im Bereich der Austrittsöffnung oder in einem radial darüber liegenden Kreuzungspunkt.

Die Austrittsöffnung ist insbesondere wenigstens teilweise und vorzugsweise vollständig an einer radialen Seite des Nabenflansches angeordnet. Die Austrittsöffnung ist insbesondere von einer axialen Seite des Nabenflansches durch eine geschlossene Umfangslinie abgegrenzt. Das bietet einen besonders belastbaren Nabenflansch. Vorzugsweis ist der Nabenflansch an dem Übergang von der axialen Seite zur radialen Seite ringartig bzw. umfänglich geschlossen. Insbesondere weist der Nabenflansch an dem Übergang von der axialen Seite zur radialen Seite keine Einstiche und/oder Ausnehmungen bzw. Bohrungen auf. Insbesondere ist die Austrittsöffnung so an der radialen Seite des Nabenflansches angeordnet, dass eine Speiche nur an der radialen Seite und nicht an einer axialen des Nabenflansches austreten kann.

Es ist bevorzugt, dass die Speichendurchführungen radial und/oder tangential im Nabenflansch verlaufen. Insbesondere verlaufen die Längsachsen der Speichendurchführungen in radialer und/oder tangentialer Richtung im Nabenflansch. Eine solche Nabe ermöglicht besonders haltbare und zugleich leichtgewichtige Laufräder.

Bei einer Nabe für ein Vorderrad verlaufen die Längsachsen insbesondere z. B. radial. Bei einer Nabe für ein Hinterrad bzw. für ein angetriebenes Laufrad verlaufen die Längsachsen beispielsweise tangential oder auch teilweise tangential und teilweise radial. Insbesondere verlaufen die Längsachsen der Speichendurchführungen nur in radialer und/oder tangentialer Richtung und nicht in axialer Richtung im Nabenflansch. Dadurch kann die Nabe besonders gut mit ungekröpften Speichen eingesetzt werden, wodurch eine besonders hohe Stabilität erreicht wird.

Insbesondere umfasst die Nabe wenigstens eine Speiche. Die Speiche ist gerade bzw. nicht gekröpft bzw. ungekröpft ausgeführt. Bevorzugt umfasst die Nabe wenigstens eine Speiche mit einem abgeflachten Speichenkopf. Es kann auch wenigstens eine Speiche mit einem nicht abgeflachten Speichenkopf umfasst sein, z. B. einem eckigen, mehreckigen, runden und/oder abgerundeten Speichenkopf. Die Speiche folgt vorzugsweise der Richtung ihrer Speichendurchführung. Die Speiche weist insbesondere einen einzelnen Speichenkörper bzw. Speichenschaft auf. Die Speiche ist insbesondere nicht an einen andere Speiche angebunden bzw. an dieser befestigt. Vorzugsweise sind das Nabengehäuse und der wenigstens eine Nabenflansch einstückig ausgebildet. Insbesondere umfasst die Nabe zwei Nabenflansche, welche vorzugsweise beide einstückig mit dem Nabengehäuse verbunden sind.

Das erfindungsgemäße Laufrad umfasst die zuvor beschriebene erfindungsgemäße Nabe. Insbesondere umfasst das Laufrad eine Felge und eine Mehrzahl von Speichen.

Auch das erfindungsgemäße Laufrad hat viele Vorteile. Einen besonderen Vorteil bieten die gemeinsamen und umfänglich geschlossenen Austrittsöffnungen. Dadurch erhält das Laufrad eine hohe Stabilität und die Speichen sind sicher aufgenommen. In einer vorteilhaften Ausgestaltung des Laufrades weist die Austrittsöffnung einen Öffnungsquerschnitt auf, in welchen zwei Speichen mit einem axialen Versatz zueinander aufnehmbar sind. Dabei kreuzen sich die aufgenommenen Speichen insbesondere. Insbesondere sind die Speichen in Speichendurchführungen mit sich kreuzenden Längsachsen aufgenommen. Die Längsachsen kreuzen sich insbesondere in einer gedachten Verlängerung außerhalb der Speichendurchführungen. Vorzugsweise ist jede Speiche in einem Langloch aufgenommen. Die Langlöcher einer Austrittsöffnung überschneiden sich dabei insbesondere. Insbesondere sind die Speichen mit einem Versatz gegenüber einer Umfangslinie des Nabenflansches angeordnet. Dabei liegt vorzugsweise eine Speiche axial weiter innen und eine Speiche axial weiter außen als die jeweils andere. Insbesondere berühren sich zwei Speichen axial.

Bevorzugt treten die Speichen in radialer und/oder tangentialer und vorzugsweise nicht in axialer Richtung aus dem Nabenflansch heraus. Erfindungsgemäß sind die Speichen gerade bzw. ungekröpft. Ein solches Laufrad ist besonders haltbar und belastbar. Insbesondere treten die Speichen an einer radialen Seite des Nabenflansches aus.

Die Achse kann als konventionelle Achse oder auch als Steckachse ausgebildet sein.

Weitere Vorteile und Merkmale der vorliegenden Erfindung ergeben sich aus der Beschreibung der Ausführungsbeispiele, welche mit Bezug auf die beiliegenden Figuren im Folgenden erläutert werden.

In den Figuren zeigen:
- Fig. 1: eine schematische Seitenansicht eines Fahrrads;
- Fig. 2: eine schematische Darstellung einer erfindungsgemäßen Nabe in einer perspektivischen Ansicht;
- Fig. 3: ein schematischer Ausschnitt der Nabe in einer Frontansicht;
- Fig. 4: eine schematische Darstellung der Nabe in einer Seitenansicht;
- Fig. 5: ein vergrößerter Ausschnitt der Darstellung der Fig. 4;
- Fig. 6: ein schematischer Ausschnitt der Nabe in einer perspektivischen Ansicht;
- Fig. 7: ein schematischer Ausschnitt der Nabe in einer weiteren perspektivischen Ansicht;
- Fig. 8: eine schematische Darstellung einer Nabe in einer perspektivischen Ansicht;
- Fig. 9: eine schematische Darstellung einer weiteren Nabe in einer perspektivischen Ansicht; und
- Fig. 10: schematische Darstellungen des Nabenflansches während des Einsetzens von Speichen in einer perspektivischen Ansicht.

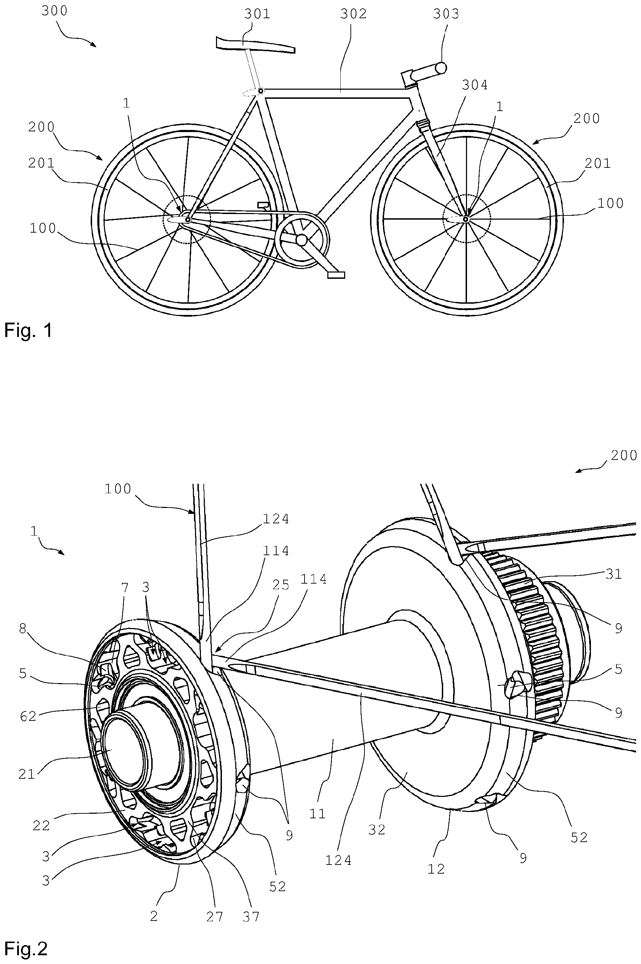

Die Figur 1 zeigt eine stark schematische Darstellung eines Fahrrads 300, welches hier als ein Rennrad bzw. Tourenrad ausgebildet ist. Das Fahrrad 300 kann auch als ein Mountainbike und/oder als ein teilweise muskelkraftbetriebenes Zweirad und beispielsweise als ein E-Bike ausgebildet sein. Das Fahrrad 300 weist zwei Laufräder 200 auf, welche hier mit einer erfindungsgemäßen Nabe 1 ausgestattet sind.

Weiterhin umfasst das Fahrrad 300 einen Sattel 301, einen Rahmen 302, einen Lenker 303 und eine Gabel 304 sowie weitere Fahrradkomponenten. Als Teil eines Antriebs umfasst das Fahrrad 300 hier eine Kettenschaltung. Für eine Kettenschaltung kann die Nabe 1 beispielsweise einen Rotor aufweisen, an dem einzelne Ritzel bzw. eine Kassette aufnehmbar sind. Weiterhin verfügt das Fahrrad 300 über eine Bremseinrichtung. Dazu kann an den Naben 1 der beiden Laufräder 200 jeweils eine Bremsenaufnahme 31 vorgesehen sein, um eine Bremsscheibe drehfest montieren zu können. Die als Vorderrad und Hinterrad ausgebildeten Laufräder 200 sind jeweils an Ausfallenden der Gabel 304 bzw. des Rahmens 302 befestigt.

Die Laufräder 200 weisen jeweils eine Felge 201 und eine Mehrzahl von Speichen 100 auf. Die Speichen 100 sind mit einem Ende an der Nabe 1 und mit einem anderen Ende an der Felge 201 befestigt. Die Speichen 100 sind hier als gerade bzw. nicht gekröpfte Speichen 100 ausgeführt. Bevorzugt sind Messerspeichen 104 vorgesehen. Die Speichen 100 umfassen jeweils einen Speichenkörper 101 mit einem abgeflachten Speichenkopf 102, welcher hier nicht sichtbar in der Nabe 1 aufgenommen ist.

In den Figuren 2-7 ist eine erfindungsgemäße Nabe 1 in verschiedenen Ansichten näher dargestellt. Die Nabe 1 kann Teil eines Laufrades 200 sein. Zur besseren Übersichtlichkeit sind nicht alle der vorgesehenen Speichen 100 dargestellt.

Die Nabe 1 umfasst zwei Nabenflansche 2, 12, welche an einem Nabengehäuse 11 aufgenommen sind. Das Nabengehäuse 11 ist gegenüber einer Achse 21 der Nabe 1 drehbar gelagert. An dem Nabengehäuse 11 ist eine Bremsenaufnahme 31 zur Befestigung von Bremsscheiben angebracht.

Der Nabenflansch 2, 12 weist eine Mehrzahl von Aufnahmeabschnitten 3 zur Aufnahme jeweils eines Speichenkopfes 102 auf. Dabei ist der Nabenflansch 2, 12 hier für eine Aufnahme ungekröpfter bzw. gerader Speichen 100 ausgebildet. Die Speichen 100 verlassen die Aufnahmeabschnitte 3 über eine Speichendurchführung 5 in Richtung der Felge 201.

Die Speichendurchführungen 5 weisen hier eine so ausgerichtete Längsachse auf, dass eine tangentiale Anordnung der Speichen 100 im Laufrad 200 vorliegt. Es kann aber auch eine radiale Einspeichung vorgesehen sein. Zudem ist die Anordnung der Aufnahmeabschnitte 3 bzw. die Ausrichtung der Speichendurchführung 5 hier so gewählt, dass eine Speiche 100 sich wenigstens einmal mit einer anderen Speiche 100 kreuzt.

Die Nabe 1 umfasst hier Aufnahmeabschnitte 3 mit jeweils einer umfänglich geschlossenen Speichendurchführung 5. Die Speichendurchführungen 5 weisen jeweils eine Durchgangsbohrung 35 auf.

Der Nabenflansch 2, 12 ist hier mit Aufnahmeräumen 7 ausgestattet, in denen jeweils zwei Aufnahmeabschnitte 3 paarweise angeordnet sind. Zudem sind jedem Aufnahmeraum 7 zwei Speichendurchführungen 5 zugeordnet, sodass für jeden Aufnahmeabschnitt 3 jeweils eine Speichendurchführung 5 bereitsteht. Der Nabenflansch 2, 12 kann auch Aufnahmeräume 7 aufweisen, welche jeweils nur einen einzigen Aufnahmeabschnitt 3 umfassen. Die Längsachsen der Speichendurchführungen 5 eines Aufnahmeraums 7 verlaufen hier so, dass die in einem Aufnahmeraum 7 aufgenommenen Speichen 100 in entgegengesetzte Richtungen aus dem Nabenflansch 2, 12 heraustreten und sich somit nicht kreuzen.

Die Aufnahmeräume 7 sind hier zu einer axial außen liegenden Seite 22 des Nabenflansches 2, 12 offen ausgebildet. Entsprechend sind auch die Aufnahmeabschnitte 3 nur an der axialen Außenseite 22 des Nabenflansches 2, 12 angeordnet. Die Aufnahmeräume 7 sind hier jeweils durch eine axiale Rückwand 17 und durch eine quer zur Rückwand 17 verlaufende Seitenwand 27 begrenzt. Die axiale Rückwand 17 bildet hier einen "Boden" der Aufnahmeräume 7. Die Seitenwand 27 kann auch als Umfangswand bezeichnet werden. Die Rückwand 17 wird hier durch die axiale Außenseite 22 des Nabenflansches 2, 12 zur Verfügung gestellt. Die Seitenwände 27 umgeben die jeweiligen Aufnahmeräume 7 und sind von den Speichendurchführungen 5 der im Aufnahmeraum 7 angeordneten Aufnahmeabschnitte 3 durchbrochen.

Die Seitenwände 27 der Aufnahmeräume 7 stellen hier Stege 37 zur Verfügung bzw. begrenzen diese. Die Stege verlaufen im Wesentlichen tangential und insbesondere tangential. Dabei stellen die Seitenwände 27 benachbarter Aufnahmeräume 7 gemeinsam jeweils einen Steg 37 zur Verfügung.

Zwischen den Aufnahmeräumen 7 sind hier Vertiefungen 62 zur Gewichtsreduktion in die axiale Außenseite 22 des Nabenflansches 2, 12 eingearbeitet. Die Vertiefungen 62 sind von einer umlaufenden Seitenwand 27 (Umfangswand) umgeben und bilden gemeinsam mit den Seitenwänden 27 der jeweils angrenzenden Aufnahmeräume 7 ebenfalls Stege 37.

Durch die Anordnung der Aufnahmeabschnitte 3 in eine Mehrzahl von Aufnahmeräumen 7 ergibt sich ein sehr stabiler und belastbarer konstruktiver Aufbau des Nabenflansches 2, 12. Dadurch kann auf durchgehende und die Gesamtstabilität des Nabenflansches 2, 12 schwächende Aussparungen zur Aufnahme der Speichen 100 verzichtet werden. Durch die umgebenden Seitenwände 27 und die zwischen den Aufnahmeräumen 7 angeordneten Stege 37 können die auftretenden Zugkräfte gut aufgenommen und abgeleitet werden. Da die Vertiefungen 62 zur Gewichtsreduktion ebenfalls von Seitenwänden 27 umgeben sind bzw. von Stegen 37 begrenzt sind, tragen auch diese vorteilhaft zur Stabilität bei.

Der Nabenflansch 2, 12 weist hier umfänglich geschlossene Austrittsöffnungen 9 auf. Durch diese sind in den Aufnahmeabschnitten 3 aufgenommene Speichen 100 in tangentialer Richtung aus dem Nabenflansch 2, 12 in Richtung einer Felge 201 herausführbar. Dabei sind die Austrittsöffnungen 9 an der radialen Oberseite 52 des Nabenflansches 2, 12 angeordnet. An den axialen Seiten 22, 32 sind keine Austrittsöffnungen 9 vorgesehen.

Für jeweils zwei Speichendurchführungen 5 ist eine gemeinsame Austrittsöffnung 9 vorgesehen, sodass zwei Speichen 100 aus einer Austrittsöffnung 9 den Nabenflansch 2, 12 verlassen können. Der Nabenflansch 2, 12 umgibt die Austrittsöffnung 9 hier einstückig. Dadurch wird eine besonders hohe Stabilität des Nabenflansches 2 erreicht.

Dabei sind jeder Austrittsöffnung 9 zwei Speichendurchführungen 5 zugeordnet, welche aus verschiedenen Aufnahmeräumen 7 stammen. Für die in einem Aufnahmeraum 7 angeordneten Aufnahmeabschnitte 3 und Speichendurchführungen 5 sind jeweils unterschiedliche und separate Austrittsöffnungen 9 vorgesehen. In der hier gezeigten Nabe 1 sind die Speichendurchführungen 5 benachbarter Aufnahmeräume 7 jeweils einer Austrittsöffnung 9 zugeordnet. Auf durchgehende bzw. großflächige Ausnehmungen, welche den Nabenflansch 2, 12 insgesamt schwächen, kann daher vorteilhaft verzichtet werden. Zudem kann die Anzahl der notwendigen Bohrungen bzw. Ausnehmungen erheblich reduziert werden.

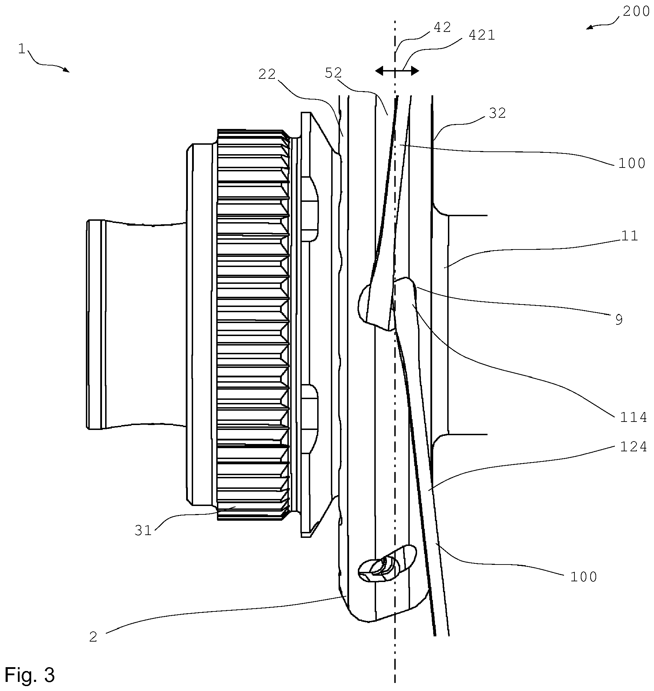

Der Öffnungsquerschnitt 19 der Austrittsöffnungen 9 ist hier an den Querschnitt der Speichen 100 angepasst. Dadurch sind axial versetzt angeordnete Speichen 100 möglich. Dazu ist eine Anordnung der Aufnahmeabschnitte 3 mit einem Versatz 421 gegenüber einer Umfangslinie 42 des Nabenflansches 2, 12 vorgesehen. Der Versatz 421 ist in der Fig. 3 besonders gut zu erkennen. Dadurch ist es möglich, dass die aufgenommenen Speichen 100 sich kreuzen. Zudem sind entsprechend ausgerichtete Längsachsen der Speichendurchführungen 5 vorgesehen.

Ein weiterer Vorteil des Versatzes 421 ist, dass die sich kreuzenden Speichen 100 sehr nah beieinander angeordnet werden können, sodass ein schmaler und somit leichter Nabenflansch 2, 12 möglich ist und dadurch auch die Belastbarkeit des Laufrades 200 verbessert wird.

In der hier gezeigten Nabe 1 ist ein Kreuzungspunkt 25 möglich, welcher besonders nah an der Austrittsöffnung 9 oder sogar vorzugsweise innerhalb der Austrittsöffnung 9 liegt. Dazu sind die Austrittsöffnungen 9 mit einem entsprechend angepassten Öffnungsquerschnitt 19 versehen, sodass für den Kreuzungspunkt 25 genügend Raum ist. Dadurch wird ein besonders kompakter und optisch ansprechender und aerodynamischer Aufbau ermöglicht.

Die hier gezeigten Speichen 100 sind bevorzugt als Messerspeichen 104 ausgebildet. Die Messerspeichen 104 weisen einen zentralen abgeflachten Schaftabschnitt 124 auf, welcher von zwei zylindrischen Schaftabschnitten 114 umgeben ist. Durch die oben beschriebene Anordnung des Kreuzungspunktes 25 wird erreicht, dass der Kreuzungspunkt 25 im Bereich des zylindrischen Schaftabschnittes 114 der sich kreuzenden Speichen 100 liegt. Das wirkt sich vorteilhaft auf die Haltbarkeit des Laufrades 20 aus.

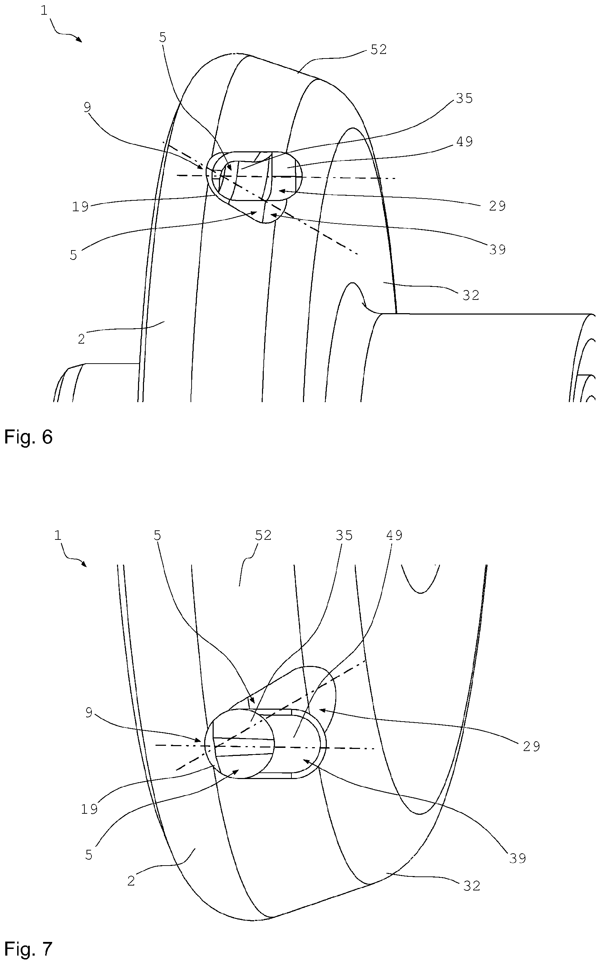

Die Öffnungsquerschnitte 19 der Austrittsöffnung 9 sind in den Figuren 6 und 7 vergrößert dargestellt. Der Öffnungsquerschnitt 19 stellt für die beiden Speichen 100, welche durch die Austrittsöffnung 9 heraustreten, jeweils ein Langloch 29, 39 zur Verfügung. Der Öffnungsquerschnitt 19 der Austrittsöffnung 9 setzt sich hier somit aus zwei Langlöchern 29, 39 zusammen, welche sich abschnittsweise überschneiden. Die Langlöcher 29, 39 sind hier oval ausgebildet.

Jedes Langloch 29, 39 stellt eine Durchgangsbohrung 35 für die Speichendurchführung zur Verfügung. Zudem ist jedem Langloch 29, 39 jeweils eine in den Nabenflansch 2,12 eingelassene Senke 49 zugeordnet. Dabei bildet die Senke 49 einen Freiraum aus, in den die Speiche 100 beim Einführen während der Montage vorübergehend eingeschoben werden kann. Durch diese Senke 49 kann während der Montage die Speiche 100 schräg eingeführt werden, ohne dass diese dabei an den Nabenflansch 2, 12 anstößt. Zudem kann die Speiche 100 in den Bereich der Senke 49 ausweichen, wenn die zweite Speiche 100 eingeschoben wird. Im montierten Zustand des Laufrades 200 verläuft die Speiche 100 dann außerhalb der Senke 49 durch die Austrittsöffnung 9.

Die beiden Langlöcher 29, 39 weisen hier Längsachsen auf, welche sich schneiden. Zur besseren Übersichtlichkeit wurden die Längsachsen hier als eine gestrichelt/gepunktete Linie eingezeichnet. Durch diese Anordnung der Längsachsen ergibt sich eine V-förmige Anordnung der Langlöcher 29, 39 zueinander. Dabei ist der Winkel der sich schneidenden Längsachsen der Langlöcher 29, 39 vorzugsweise auf den tangentialen Austrittswinkel der Speichen 100 angepasst.

In der Figur 6 ist das Langloch 29 gestrichelt umrandet, welches für die axial innen liegende Speiche 100 vorgesehen ist. In der Figur 7 ist hingegen das Langloch 39 gestrichelt umrandet, welches für die axial außen liegende Speiche 100 vorgesehen ist. Die Langlöcher 29, 39 überschneiden sich hier teilweise. Dadurch kann der Öffnungsquerschnitt 19 besonders gering gehalten werden und bietet dennoch ausreichend Raum zur Aufnahme der Speichen 100.

Die Aufnahmeräume 7 sind vorzugsweise möglichst kompakt ausgestaltet, um den Nabenflansch 2, 12 nicht durch großflächige Ausnehmungen in der Stabilität zu schwächen. Um trotz der kompakten Aufnahmeräume 7 ein Einführen der Speichen 100 von der axialen Außenseite 22 schräg in die Aufnahmeabschnitte 3 bzw. Speichendurchführungen 5 zu ermöglichen, sind hier Einführungsabschnitte 59 vorgesehen.

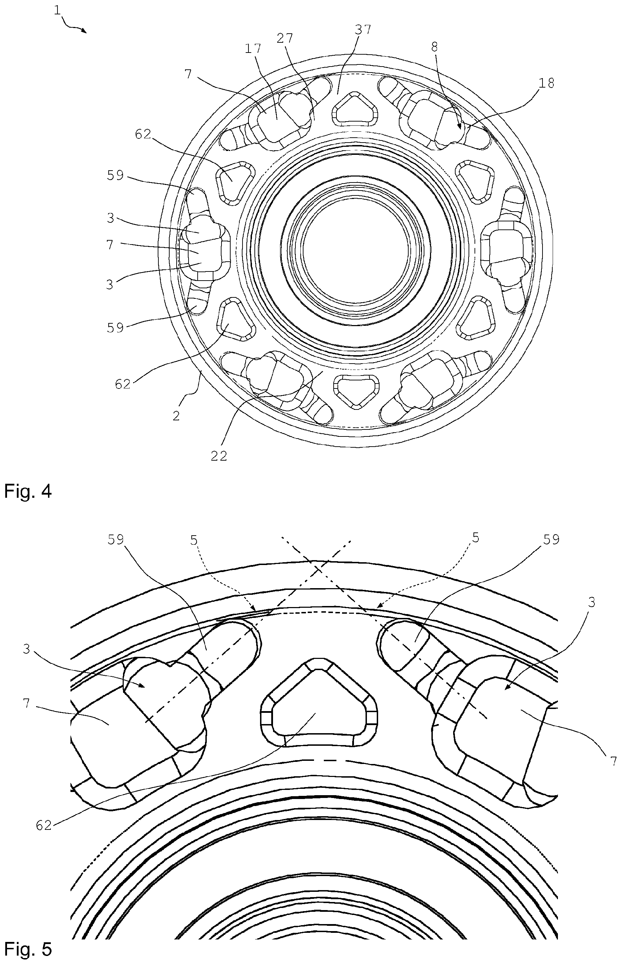

Die Einführungsabschnitte 59 sind besonders gut in der Figur 5 zu erkennen. Zur besseren Übersichtlichkeit wurden dort zwei Einführungsabschnitte 59 von zwei benachbarten Aufnahmeräumen 7 gestrichelt umrandet.

Die Einführungsabschnitte 59 sind hier axial offen bzw. als Öffnungen an der axialen Außenseite 22 des Nabenflansches 2,12 ausgebildet. Die Einführungsabschnitte 59 sind hier als längliche Durchstiche in die axiale Außenseite 22 des Nabenflansches 2, 12 eingearbeitet. Dabei gehen die Einführungsabschnitte 59 umfänglich offen in die Aufnahmeräume 7 bzw. in die darin eingebetteten Aufnahmeabschnitte 3 über. Dadurch kann die Speiche 100 zunächst über den Einführungsabschnitt 59 in die Speichendurchführung 5 eingeschoben werden. Ist die Speiche 100 weit genug eingeschoben, kann der Speichenkopf 102 einfach in den Aufnahmeabschnitt 3 des Aufnahmeraums 7 eingesetzt werden.

Die Speichendurchführung 5 und ihr Einführungsabschnitt 59 sind entlang ihrer Längsachsen parallel ausgerichtet. Zur besseren Übersichtlichkeit wurden die Längsachsen hier als gestrichelt/gepunktete Linien dargestellt. Eine solche Ausrichtung von Einführungsabschnitt 59 und Speichendurchführung 5 verbessert die Einführbarkeit der Speichen 100.

In den Aufnahmeräumen 7 ist hier wenigstens eine Aufnahmetasche 8 mit wenigstens einem Hinterschnitt 18 angeordnet. Dadurch wird eine verdrehsichere Aufnahme des Speichenkopfes 102 erreicht. Durch den Hinterschnitt 18 ist eine axiale Bewegung des darin aufgenommenen Speichenkopfes 102 nicht mehr möglich bzw. stark eingeschränkt. Zudem kann sich die Speiche 100 nicht mehr verdrehen. Das ist besonders vorteilhaft bei Messerspeichen 104, da diese bereits bei sehr geringen Verdrehungen um ihre Längsachse ihre aerodynamischen Vorteile einbüßen.

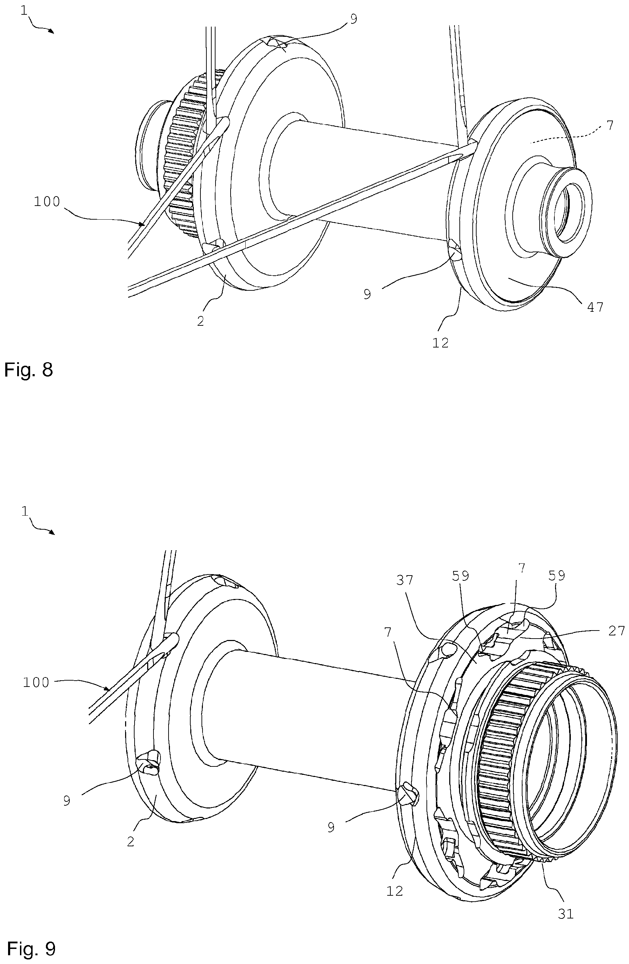

In der Figur 8 ist eine Ausführung einer Nabe 1 gezeigt, bei der die Aufnahmeräume 7 durch eine Abdeckung 47 verschlossen sind. Die Abdeckung 47 ist hier als eine ringförmige Scheibe ausgebildet und wurde nach der Montage der Speichen 100 aufgesetzt. Eine solche Abdeckung 47 bietet insbesondere aerodynamische Vorteile, da der Nabenflansch 2, 12 mit einer ebenen Außenseite 22 ausgestattet ist.

In der Figur 9 ist eine Nabe 1 gezeigt, bei der keine Vertiefungen 62 zur Gewichtsreduktion im Nabenflansch 2, 12 ausgebildet sind. Dabei ist möglich, dass an dem gegenüberliegenden Nabenflansch 2 Vertiefungen 62 ausgebildet sind. Beispielsweise kann dieser Nabenflansch 2 so ausgebildet sein, wie in der Figur 2 gezeigt. Eine Nabe 1 mit zwei unterschiedlich ausgestalteten Nabenflanschen 2, 12 ist besonders vorteilhaft, wenn an einem Nabenflansch 12 eine Bremsenaufnahme 31 und/oder eine Rotoraufnahme vorgesehen sind.

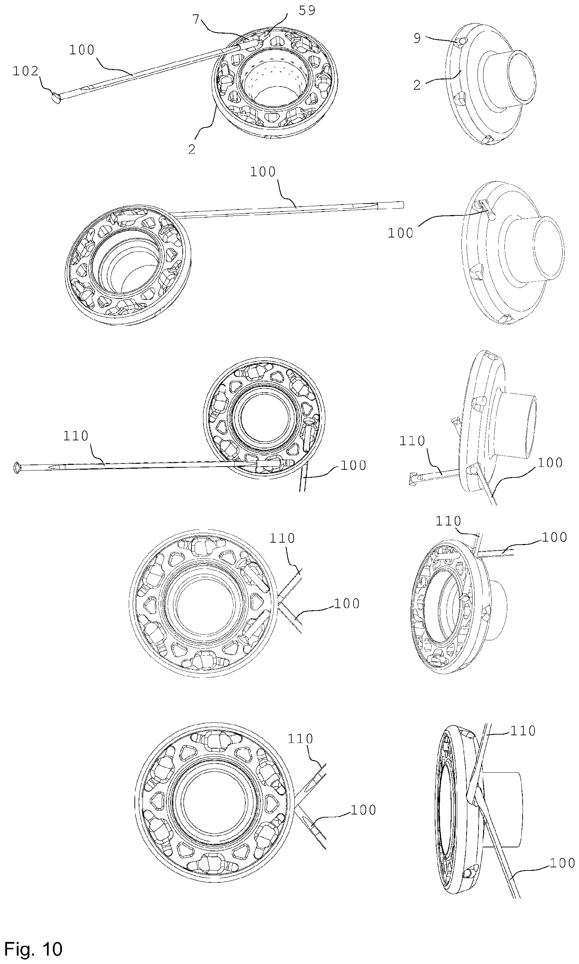

Die Figur 10 zeigt eine stark schematisierte Übersicht der Montage von Speichen 100, 110 in der erfindungsgemäßen Nabe 1, z. B. zur Herstellung eines Laufrades 200. Dabei sind insgesamt fünf verschiedene Montageschritte gezeigt. Jeder Montageschritt wird dabei durch zwei nebeneinander angeordnete Darstellungen eines Nabenflansches 2 verdeutlicht.

In dem ganz oben dargestellten Montageschritt wird eine erste Speiche 100 in den Nabenflansch 2 eingeführt. Dazu wird das dem Speichenkopf 102 gegenüberliegende Ende in die Speichendurchführung 5 eingeschoben.

Im nächsten Montageschritt ist die Speiche 100 bereits weiter eingeschoben und verlässt den Nabenflansch 2 durch die Austrittsöffnung 9 in Richtung einer hier nicht dargestellten Felge 201.

In einem dritten Montageschritt wird nun die zweite Speiche 110 eingeführt. Dazu wird die erste Speiche 100 entsprechend schräg gestellt, um genügend Raum für die zweite Speiche 110 zur Verfügung zu haben. Dabei liegt die erste Speiche 100 so, dass ihr Ende mit dem Speichenkopf 102 durch den Einführungsabschnitt 59 nach axial außen 22 tritt. Zudem ist die Speiche 100 so schräg gestellt, dass sie in der Senke 59 des Langlochs 29 liegt. In dieser Position steht in der Austrittsöffnung 9 genügend Raum für die zweite Speiche 110 zur Verfügung. Diese kann nun eingeschoben werden.

Im nachfolgenden Montageschritt sind beide Speichen 100, 110 nahezu vollständig eingeschoben. Da ihre Speichenköpfe 102 noch nicht vollständig im Aufnahmeraum 7 bzw. in der darin vorgesehenen Aufnahmetasche 8 angeordnet sind, stehen die Speichen 100, 110 entsprechend schräg. In dieser Stellung beanspruchen beide Speichen 100, 110 ihren jeweiligen Einführungsabschnitt 59 und liegen im Bereich der Senke 49 ihres jeweiligen Langlochs 29, 39.

In den unteren Abbildungen ist die Montage abgeschlossen. Die Speichen 100, 110 sind vollständig eingeführt und ihre Speichenköpfe 102 liegen verdrehsicher in den Hinterschnitten 18 der Aufnahmetaschen 8. Die Speichen 100, 110 befinden sich nun nicht mehr in den Einführungsabschnitten 59 und verlaufen mit ihrer Längsachse parallel zu der Längsachse der Speichendurchführung 5.

Die Austrittsöffnungen mit den Senken 49, die Speichendurchführungen 5 sowie die Aufnahmeräume 7 und die Vertiefungen 62 sind hier vorzugsweise durch Bohrungen bzw. Ausfräsungen in den Nabenkörper eingearbeitet. Die Aufnahmetasche 8 ist vorzugsweise als eine Formfräsung in den Nabenflansch 2, 12 eingearbeitet.

**Bezugszeichenliste:**

| | | | |
|---|---|---|---|
| 1 | Nabe | 47 | Abdeckung |
| 2 | Nabenflansch | 49 | Senke |
| 3 | Aufnahmeabschnitt | 52 | Oberseite |
| 5 | Speichendurchführung | 59 | Einführungsabschnitt |
| 7 | Aufnahmeraum | 62 | Vertiefung |
| 8 | Aufnahmetasche | 100 | Speiche |
| 9 | Austrittsöffnung | 101 | Speichenkörper |
| 11 | Nabengehäuse | 102 | Speichenkopf |
| 12 | Nabenflansch | 104 | Messerspeiche |
| 17 | Rückwand | 110 | Speiche |
| 18 | Hinterschnitt | 114 | Schaftabschnitt |
| 19 | Öffnungsquerschnitt | 124 | Schaftabschnitt |
| 21 | Achse | 200 | Laufrad |
| 22 | Seite | 201 | Felge |
| 25 | Kreuzungspunkt | 300 | Fahrrad |
| 27 | Seitenwand | 301 | Sattel |
| 29 | Langloch | 302 | Rahmen |
| 31 | Bremsenaufnahme | 303 | Lenker |
| 32 | Seite | 304 | Gabel |
| 35 | Durchgangsbohrung | 421 | Versatz |
| 37 | Steg | | |
| 39 | Langloch | | |
| 42 | Umfangslinie | | |

## Patentansprüche

1. Nabe (1) mit einem Nabengehäuse (11) zur drehbaren Anordnung gegenüber wenigstens einer im Nabengehäuse (11) aufgenommenen Achse (21), wobei an dem Nabengehäuse (11) wenigstens ein umlaufender Nabenflansch (2, 12) vorgesehen ist, der zur Aufnahme und definierten Orientierung einer Mehrzahl an geraden bzw. ungekröpften Speichen (100) dient, die jeweils einen Speichenkörper (101) und einen Speichenkopf (102) aufweisen und wobei der Nabenflansch (2, 12) eine Mehrzahl von Aufnahmeabschnitten (3) zur Aufnahme jeweils eines Speichenkopfes (102) umfasst, wobei die Aufnahmeabschnitte (3) wenigstens teilweise axial an dem Nabenflansch (2, 12) angeordnet sind und wobei den Aufnahmeabschnitten (3) jeweils eine Speichendurchführung (5) zugeordnet ist, durch welche eine aufgenommene Speiche (100) aus dem Aufnahmeabschnitt (3) herausführbar ist, **dadurch gekennzeichnet,**
**dass** für jeweils zwei Speichendurchführungen (5) eine gemeinsame und umfänglich geschlossene Austrittsöffnung (9) im Nabenflansch (2, 12) vorgesehen ist
und **dass** der Nabenflansch (2, 12) die Austrittsöffnung (9) einstückig umgibt.

2. Nabe (1) nach dem vorhergehenden Anspruch, wobei die Austrittsöffnung (9) einen Öffnungsquerschnitt (19) aufweist, welcher derart ausgebildet ist, dass wenigstens eine aufzunehmende Speiche (100) von einer axialen Außenseite (22) des Nabenflansches (2, 12) eingeführt werden kann.

3. Nabe (1) nach einem der vorhergehenden Ansprüche, wobei die Austrittsöffnung (9) einen Öffnungsquerschnitt (19) aufweist, welcher derart ausgebildet ist, dass eine weitere aufzunehmende Speiche (100) von einer axialen Außenseite (22) des Nabenflansches (2, 12) eingeführt werden kann, wenn bereits eine Speiche (100) in der Austrittsöffnung (9) angeordnet ist.

4. Nabe (1) nach einem der vorhergehenden Ansprüche, wobei die Austrittsöffnung (9) einen Öffnungsquerschnitt (19) aufweist, welcher für beide aufzunehmenden Speichen (100) jeweils ein Langloch (29, 39) zur Verfügung stellt.

5. Nabe (1) nach dem vorhergehenden Anspruch, wobei wenigstens ein Langloch (29, 39) durch eine Durchgangsbohrung (35) der Speichendurchführung (5) und eine in den Nabenflansch (2, 12) eingelassene Senke (49) gebildet wird.

6. Nabe (1) nach einem der beiden vorhergehenden Ansprüche, wobei die Langlöcher (29, 39) sich schneidende Längsachsen aufweisen, sodass sich eine V-förmige Anordnung der Langlöcher (29, 39) zueinander ergibt und/oder wobei sich die Langlöcher (29, 39) wenigstens teilweise überschneiden.

7. Nabe (1) nach einem der vorhergehenden Ansprüche, wobei die Aufnahmeabschnitte (3) nur an einer axialen Seite (22, 32) des Nabenflansches (2, 12) und insbesondere an einer axialen Außenseite (22) des Nabenflansches (2, 12) angeordnet sind.

8. Nabe (1) nach einem der vorhergehenden Ansprüche, wobei die Aufnahmeabschnitte (3) wenigstens teilweise in wenigstens einem Aufnahmeraum (7) angeordnet sind und wobei der Aufnahmeraum (7) axial offen ausgebildet ist und/oder wobei der Aufnahmeraum (7) durch wenigstens eine Abdeckung (47) verschließbar ist.

9. Nabe (1) nach dem vorhergehenden Anspruch, wobei der Aufnahmeraum (7) durch wenigstens eine axiale Rückwand (17) und durch wenigstens eine wenigstens teilweise umlaufende Seitenwand (27) begrenzt ist.

10. Nabe (1) nach dem vorhergehenden Anspruch, wobei die Seitenwand (27) wenigstens abschnittsweise einen radial und/oder tangential verlaufenden Steg (37) zur Verfügung stellt.

11. Nabe (1) nach einem der drei vorhergehenden Ansprüche, wobei wenigstens einige der Aufnahmeabschnitte (4) einzeln in jeweils einem Aufnahmeraum (7) und/oder wobei wenigstens einige der Aufnahmeabschnitte (3) paarweise in jeweils einem Aufnahmeraum (7) angeordnet sind.

12. Nabe (1) nach einem der vier vorhergehenden Ansprüche, wobei im Aufnahmeraum (7) wenigstens eine Aufnahmetasche (8) mit wenigstens einem Hinterschnitt (18) angeordnet ist, welche dazu geeignet und ausgebildet ist, den Speichenkopf (102) verdrehsicher zu halten.

13. Nabe (1) nach dem vorhergehenden Anspruch, wobei die Aufnahmetasche (8) sich abschnittsweise mit wenigstens einem axial offenen Einführungsabschnitt (59) überschneidet, sodass die Aufnahmetasche (8) abschnittsweise axial offen ausgebildet ist.

14. Nabe (1) nach einem der vorhergehenden Ansprüche, wobei die Speichendurchführungen (5) radial und/oder tangential im Nabenflansch (2, 12) verlaufen.

15. Laufrad (200) mit einer Nabe (1) nach einem der vorhergehenden Ansprüche.

## Claims

1. Hub (1) comprising a hub shell (11) for rotatable arrangement relative to at least one axle (21) received in the hub shell (11), wherein the hub shell (11) is provided with at least one circumferential hub flange (2, 12) that serves for accommodation and defined orientation of a plurality of straight respectively non-cranked spokes (100), each of which comprises a spoke body (101) and a spoke head (102), and wherein the hub flange (2, 12) comprises a plurality of accommodation sections (3) for receiving one spoke head (102) each, wherein the accommodation sections (3) are at least partially axially disposed on the hub flange (2, 12), and wherein one spoke feed-through (5) is assigned to each of the accommodation sections (3), through which an accommodated spoke (100) can be guided out of the accommodation section (3),
**characterized in**
**that** two spoke feed-throughs (5) each are provided with one joint and circumferentially closed outlet opening (9) in the hub flanges (2, 12),
and **that** the hub flanges (2, 12) enclose the outlet opening (9) integrally.

2. The hub (1) according to the preceding claim, wherein the outlet opening (9) comprises an opening cross-section (19), which is configured such that at least one spoke (100) to be accommodated can be inserted from an axially outwardly surface (22) of the hub flange (2, 12).

3. The hub (1) according to any of the preceding claims, wherein the outlet opening (9) comprises an opening cross-section (19), which is configured such that another spoke (100) to be accommodated can be inserted from an axially outwardly surface (22) of the hub flange (2, 12) if one spoke (100) is already disposed in the outlet opening (9).

4. The hub (1) according to any of the preceding claims, wherein the outlet opening (9) comprises an opening cross-section (19), which provides an elongated hole (29, 39) for each of the two spokes (100) to be accommodated.

5. The hub (1) according to the preceding claim, wherein at least one elongated hole (29, 39) is formed by a through bore (35) of the spoke feed-through (5) and a dip (49) worked into the hub flange (2, 12).

6. The hub (1) according to any of the two preceding claims, wherein the elongated holes (29, 39) comprise intersecting longitudinal axes so as to result in a V-shaped arrangement of the elongated holes (29, 39) relative to one another, and/or wherein the elongated holes (29, 39) at least partially intersect.

7. The hub (1) according to any of the preceding claims, wherein the accommodation sections (3) are only disposed on one axial side face (22, 32) of the hub flange (2, 12) and in particular on an axially outwardly surface (22) of the hub flange (2, 12).

8. The hub (1) according to any of the preceding claims, wherein the accommodation sections (3) are at least partially disposed in at least one takeup space (7), and wherein the takeup space (7) is configured axially open, and/or wherein the takeup space (7) can be closed by at least one cover (47).

9. The hub (1) according to the preceding claim, wherein the takeup space (7) is enclosed by at least one axial back wall (17) and by at least one at least partially circumferential sidewall (27) .

10. The hub (1) according to the preceding claim, wherein the sidewall (27) provides a radially and/or tangentially extending ridge (37) at least in sections.

11. The hub (1) according to any of the three preceding claims, wherein at least some of the accommodation sections (4) are disposed singly in one takeup space (7) each, and/or wherein at least some of the accommodation sections (3) are disposed in pairs in one takeup space (7) each.

12. The hub (1) according to any of the four preceding claims, wherein in the takeup space (7) at least one receiving pocket (8) having at least one undercut (18) is disposed, which is suitable and configured to non-rotatably retain the spoke head (102) .

13. The hub (1) according to the preceding claim, wherein the receiving pocket (8) intersects in sections with at least one axially open insertion section (59), so that the receiving pocket (8) is configured axially open in sections.

14. The hub (1) according to any of the preceding claims, wherein the spoke feed-throughs (5) extend radially and/or tangentially in the hub flanges (2, 12).

15. Wheel (200) with a hub (1) according to any of the preceding claims.

## Revendications

1. Moyeu (1) comprenant un boîtier de moyeu (11) pour un agencement rotatif par rapport à au moins un axe (21) reçu à l'intérieur du boîtier de moyeu (11), dans lequel au moins une bride de moyeu (2, 12) circonférentielle est prévue au niveau du boîtier de moyeu (11), qui sert à recevoir et à orienter de manière définie une pluralité de rayons (100) droits ou bien non coudés qui présentent chacun un corps de rayon (101) et une tête de rayon (102), et dans lequel ladite bride de moyeu (2, 12) comprend une pluralité de sections de réception (3) destinées à recevoir chacune une tête de rayon (102), dans lequel les sections de réception (3) sont disposées au moins en partie axialement sur la bride de moyeu (2, 12), et dans lequel un passage de rayon (5) est associé respectivement aux sections de réception (3, 4), à travers lequel un rayon (100) reçu peut être mené hors de la section de réception (3),
**caractérisé par le fait**
**qu'**une ouverture de sortie (9) commune et circonférentiellement fermée est prévue dans la bride de moyeu (2, 12) pour respectivement deux passages de rayon (5)
et **que** la bride de moyeu (2, 12) entoure en une seule pièce ladite ouverture de sortie (9).

2. Moyeu (1) selon la revendication précédente, dans lequel l'ouverture de sortie (9) présente une section transversale d'ouverture (19) qui est conçue de telle sorte qu'au moins un rayon (100) à recevoir peut être introduit depuis un côté extérieur axial (22) de la bride de moyeu (2, 12).

3. Moyeu (1) selon l'une quelconque des revendications précédentes, dans lequel l'ouverture de sortie (9) présente une section transversale d'ouverture (19) qui est conçue de telle sorte qu'un autre rayon (100) à recevoir peut être introduit depuis un côté extérieur axial (22) de la bride de moyeu (2, 12) lorsque déjà un rayon (100) est disposé dans l'ouverture de sortie (9).

4. Moyeu (1) selon l'une quelconque des revendications précédentes, dans lequel l'ouverture de sortie (9) présente une section transversale d'ouverture (19) qui fournit respectivement un trou oblong (29, 39) pour les deux rayons (100) à recevoir.

5. Moyeu (1) selon la revendication précédente, dans lequel au moins un trou oblong (29, 39) est formé par un trou traversant (35) du passage de rayon (5) et une dépression (49) ménagée dans la bride de moyeu (2, 12).

6. Moyeu (1) selon l'une quelconque des deux revendications précédentes, dans lequel les trous oblongs (29, 39) présentent des axes longitudinaux qui se croisent de sorte que l'on obtient un agencement en forme de V des trous oblongs (29, 39) les uns par rapport aux autres et/ou dans lequel les trous oblongs (29, 39) se chevauchent au moins en partie.

7. Moyeu (1) selon l'une quelconque des revendications précédentes, dans lequel les sections de réception (3) ne sont disposées que sur une face axiale (22, 32) de la bride de moyeu (2, 12) et en particulier sur une face extérieure axiale (22) de la bride de moyeu (2, 12).

8. Moyeu (1) selon l'une quelconque des revendications précédentes, dans lequel les sections de réception (3) sont disposées au moins en partie dans au moins un espace de réception (7) et dans lequel ledit espace de réception (7) est conçu de manière à être axialement ouvert et/ou dans lequel ledit espace de réception (7) peut être fermé par au moins une couverture (47).

9. Moyeu (1) selon la revendication précédente, dans lequel l'espace de réception (7) est délimité par au moins une paroi arrière axiale (17) et par au moins une paroi latérale (27) au moins en partie circonférentielle.

10. Moyeu (1) selon la revendication précédente, dans lequel la paroi latérale (27) fournit au moins par sections une entretoise (37) s'étendant de façon radiale et/ou tangentielle.

11. Moyeu (1) selon l'une quelconque des trois revendications précédentes, dans lequel au moins certaines des sections de réception (4) sont disposées individuellement dans respectivement un espace de réception (7) et/ou dans lequel au moins certaines des sections de réception (3) sont disposées par paires dans respectivement un espace de réception (7).

12. Moyeu (1) selon l'une quelconque des quatre revendications précédentes, dans lequel au moins une poche de réception (8) comprenant au moins une contre-dépouille (18) est agencée dans l'espace de réception (7), laquelle poche de réception est adaptée et conçue pour maintenir la tête de rayon (102) de manière à être bloquée en rotation.

13. Moyeu (1) selon la revendication précédente, dans lequel la poche de réception (8) et au moins une section d'insertion (59) axialement ouverte se chevauchent par sections de sorte que la poche de réception (8) est réalisée de manière à être axialement ouverte par sections.

14. Moyeu (1) selon l'une quelconque des revendications précédentes, dans lequel les passages de rayon (5) s'étendent de façon radiale et/ou tangentielle dans la bride de moyeu (2, 12).

15. Roue (200) comprenant un moyeu (1) selon l'une quelconque des revendications précédentes.
